# EUROPEAN PATENT APPLICATION

(11) **EP 4 468 136 A1**
(43) Date of publication of application: **27.11.2024**
(21) Application number: 22927643.1
(22) Date of filing: 22.02.2022
(51) Int. Cl.: G06F 3/06

(54) **METHOD AND APPARATUS FOR CONTROLLING DATA READING/WRITING**

(71) Applicant: Huawei Technologies Co., Ltd., Shenzhen, Guangdong 518129 (CN)
(72) Inventor: LI, Chuang, Shenzhen, Guangdong 518129 (CN)
(74) Representative: MERH-IP Matias Erny Reichl Hoffmann Patentanwälte PartG mbB
(86) International application number: PCT/CN2022/077262
(87) International publication number: WO 2023/159347

(57) **Abstract**

This application provides a method and an apparatus for controlling data reading/writing. The method includes: obtaining a first data packet; dividing the first data packet into a plurality of data slices; and writing the plurality of data slices in parallel into M storage devices, where M is a positive integer greater than or equal to 2. The method for controlling data reading/writing provided in this application can improve data read/write efficiency, and reduce duration required for starting up a program of a system. The apparatus provided in embodiments of this application may be used in products such as an intelligent vehicle, a new energy vehicle, and consumer electronics.

## Description

### TECHNICAL FIELD

This application relates to the field of data processing, and in particular, to a method and an apparatus for controlling data reading/writing.

### BACKGROUND

In this fast-paced era, both life and work require high efficiency. If communication tools, transportation means, or office tools lose the advantage of "fast" and lack timeliness, both work and life will be greatly affected. For example, if a system program of a terminal device like a mobile phone or a computer starts up quite slowly, it takes a long time for a system to complete startup and enter a normal working state. An in-vehicle gateway in a vehicle assumes a mission of waking up other components in the vehicle. If the in-vehicle gateway starts up quite slowly, it takes a long time for the components in the entire vehicle to start up and enter a normal working state. The foregoing problems will greatly affect user experience.

In particular, in a development trend of "Internet of Everything", a requirement for system program startup duration of each device is higher. Therefore, how to reduce duration required for starting up a program by a system is a problem that needs to be urgently resolved.

### SUMMARY

Embodiments of this application provide a method and an apparatus for controlling data reading/writing, to improve a data read/write speed, and reduce duration required for starting up a program of a system.

According to a first aspect, a method for controlling data reading/writing is provided. The method may include: obtaining a first data packet; dividing the first data packet into a plurality of data slices; and writing the plurality of data slices in parallel into M storage devices, where M is a positive integer greater than or equal to 2.

For example, sizes of the plurality of data slices may be 8 bits, 16 bits, 64 bits, or the like. This is not specifically limited in this application.

The foregoing storage device may support a plurality of SPI controllers, for example, may support any one of an SPI controller, a QSPI controller, or an OSPI controller, or may be another type of SPI controller. This is not limited in this application.

In some possible implementations, the plurality of data slices are sequentially distributed to controllers of the M storage devices. For example, the M storage devices all support the QSPI controller. For example, the first data packet is divided into 12 data slices (0 to 11), and three controllers (a QSPI_SFC1, a QSPI_SFC2, and a QSPI_SFC3) are respectively configured to control three storage devices. In this case, the data slices may be sequentially distributed to the QSPI SFC1, the QSPI SFC2, and the QSPI SFC3, so that data slices 0, 3, 6, and 9 are distributed to the QSPI_SFC1, data slices 1, 4, 7, and 10 are distributed to the QSPI_SFC2, and data slices 2, 5, 8, and 11 are distributed to the QSPI_SFC3. The foregoing is merely an example for description. Alternatively, the data slices may not be sequentially distributed, so that the data slices 0, 5, 6, and 11 are distributed to the QSPI_SFC1, the data slices 1, 4, 7, and 10 are distributed to the QSPI SFC2, and the data slices 2, 3, 8, and 9 are distributed to the QSPI SFC3. This is not specifically limited in this application.

In the foregoing technical solution, one data packet is sliced, and the data slices are controlled to be written in parallel into the plurality of storage devices, so that a data write speed can be improved, and duration required for starting up a program by a system can be reduced. When the foregoing technical solution is applied to a terminal device such as an in-vehicle gateway, a mobile phone, or a computer, duration required for system loading can be significantly reduced.

With reference to the first aspect, in some implementations of the first aspect, the method further includes: determining a first address of a first storage device based on the sizes of the plurality of data slices and an offset address of the first storage device, and determining a second address of a second storage device based on the sizes of the plurality of data slices and an offset address of the second storage device, where the M storage devices include the first storage device and the second storage device; and writing a first data slice into the first address, and writing a second data slice into the second address.

The offset address of the storage device is a start address for writing data into the device or a start address for reading data. In some possible implementations, the offset address of each storage device may be customized by a user. In some possible implementations, if the offset address of the first storage device is the same as the offset address of the second storage device, the first address is equal to the second address; or if the offset address of the first storage device is different from the offset address of the second storage device, the first address is unequal to the second address. Further, an address that is in the second storage device and that is the same as the offset address of the first storage device may be used to read/write other data. For example, if the offset address of the first storage device is 0x0, and the offset address of the second storage device is 0x1000, the data slices of the first data packet are controlled to be written in parallel into the first storage device and the second storage device from 0x0 and 0x1000 separately. Further, space between 0x0 and 0x1000 of the second storage device may be used to store data other than the first data packet, for example, may be used to store data that needs to be stored through independent operating by the second storage device. More specifically, it is assumed that the first data packet is associated with a first task. In other words, reading/writing of the first data packet may control running of the first task. A third data packet is associated with a third task. In other words, reading/writing of the third data packet may control running of the third task. In addition, the third data packet has low requirements for a storage capacity and a read/write speed, and 0x0 to 0x1000 of the second storage device can meet the requirements for the read/write speed and the capacity of the third data packet. In this case, when the first task needs to be run, N control devices may be configured to control the plurality of data slices of the first data packet to be written/read in parallel into/from the M storage devices. Some data slices of the first data packet are stored starting from 0x1000 of the second storage device. When the third task needs to be run, a controller corresponding to the second storage device may be configured to control the third data packet to be written into space 0x0 to 0x1000 reserved by the second storage device for the third task.

Other than space storing the first data packet and the third data packet, other space in the M storage devices may be further used to read/write other data. One data packet may be stored in the plurality of storage devices, or one data packet may be stored in one storage device. This is not specifically limited in this application.

In the foregoing technical solution, offset addresses of different storage devices are defined for different data packets, so that space of the storage devices can be effectively used, and storage capacity utilization of the storage devices is improved.

With reference to the first aspect, in some implementations of the first aspect, maximum clock frequencies of the first storage device and the second storage device are different.

In some possible implementations, specifications of the M storage devices are the same. In other words, maximum clock frequencies and storage capacities supported by the M storage devices are the same. Alternatively, specifications of the M storage devices may be different. In other words, maximum clock frequencies supported by the M storage devices are different, and/or storage capacities of the M storage devices are different. This is not specifically limited in this embodiment of this application.

For example, the M storage devices include the first storage device and the second storage device, and the maximum clock frequencies supported by the first storage device and the second storage device are different. In this case, when the M storage devices are controlled to read/write in parallel, the maximum clock frequency of the first storage device may be used to control the first data slice to read/write, and the maximum clock frequency of the second storage device may be used to control the second data slice to read/write. If the maximum clock frequencies of the first storage device and the second storage device are the same, the first data slice and the second data slice may be controlled to read/write at the same frequency.

When M is greater than 2, frequencies of writing a single data slice into the M storage devices may be the same, or frequencies of writing a single data slice into the M storage devices may be different.

The M storage devices may alternatively be used independently. For example, in some cases, one of the M storage devices is configured to read/write one data packet. In some possible implementations, when the maximum clock frequencies supported by the M storage devices are all different, different clock frequencies may be configured for the storage devices, so that the storage device can perform data reading/writing at the maximum clock frequency in a single-slice read/write mode.

In the foregoing technical solution, parallel reading/writing of data from/into the storage devices of different specifications are supported, so that compatibility of the storage device can be improved. When maximum clock frequencies of the plurality of storage devices are different, different clock frequencies are supported to be configured for the storage devices, to maximize read/write speeds in different modes.

With reference to the first aspect, in some implementations of the first aspect, the method further includes: writing a data slice other than the first data slice in the plurality of data slices into the first storage device.

For example, all data slices other than the first data slice in the plurality of data slices may be written into the first storage device. Alternatively, some data slices other than the first data slice in the plurality of data slices may be written into the first storage device. This is not specifically limited in this application.

In some possible implementations, all data slices of the first data packet are stored in the first storage device, to back up data. For example, the first data packet is divided into 12 data slices (0 to 11), and three controllers (the QSPI_SFC1, the QSPI_SFC2, and the QSPI_SFC3) are respectively configured to control three storage devices. In this case, the data slices may be sequentially distributed to the QSPI_SFC1, the QSPI_SFC2, and the QSPI_SFC3, so that the data slices 0, 3, 6, and 9 are distributed to the QSPI_SFC1, the data slices 1, 4, 7, and 10 are distributed to the QSPI_SFC2, and the data slices 2, 5, 8, and 11 are distributed to the QSPI_SFC3. In this way, the data slices 1, 2, 4, 5, 7, 8, 10, and 11 are further distributed to the QSPI_SFC1, so that all the data slices are stored in a storage device controlled by the QSPI_SFC1.

In some possible implementations, one copy of the 12 data slices of the first data packet is stored in storage devices controlled by the QSPI_SFC1, the QSPI_SFC2, and the QSPI_SFC3. A storage device for backing up data is not limited to the first storage device, and may alternatively be a storage device other than the first storage device. This is not specifically limited in this application.

In the foregoing technical solution, data is backed up to improve data reliability. This avoids an error in a startup process of a program of a system.

With reference to the first aspect, in some implementations of the first aspect, the method further includes: when an error occurs in the second data slice read from the second storage device, reading the second data slice from the first storage device.

In the foregoing technical solution, data is backed up, so that when an error occurs in a data reading process, same data can be read from another storage device. This improves data reliability and avoids an error in a startup process of a program of a system.

With reference to the first aspect, in some implementations of the first aspect, the method further includes: reading the plurality of data slices in parallel from the M storage devices.

In some possible implementations, the plurality of data slices are read in parallel from addresses that are of the M storage devices and that are based on a same offset address. Alternatively, the plurality of data slices are read in parallel from addresses that are of the M storage devices and that are based on different offset addresses.

With reference to the first aspect, in some implementations of the first aspect, the method further includes: reading the plurality of data slices in parallel from different addresses of the M storage devices.

In some possible implementations, the M storage devices store the first data packet. In this case, in parallel, a first data slice of the first data packet is read from the first storage device of the M storage devices, and a second data slice of the first data packet is read from the second storage device of the M storage devices, and so on. For example, the data slices of the first data packet are stored in addresses 0x0, 0x1, 0x2, 0x3, 0x4, and 0x5 of each of the M storage devices. In this case, in parallel, the first data slice is read from 0x0 of the first storage device, the second data slice is read from 0x1 of the second storage device, and so on.

In the foregoing technical solution, data is read in parallel from the plurality of storage devices, so that a data read speed can be improved, and duration required for starting up a program by a system can be reduced. When the foregoing technical solution is applied to a terminal device such as an in-vehicle gateway, a mobile phone, or a computer, duration required for system loading can be significantly reduced.

With reference to the first aspect, in some implementations of the first aspect, the method further includes: determining the M storage devices according to a first instruction, where the first instruction is determined based on a capacity required by the first data packet and a read/write speed required by the first data packet.

In some possible implementations, the M storage devices configured to store the first data packet are determined based on a required capacity for storing the first data packet and a required read/write speed.

In the foregoing technical solution, configuration of a controller and the storage device is determined based on the required capacity for storing the first data packet and the required read/write speed. This assists configuration personnel in completing basic configuration and planning of the storage device.

With reference to the first aspect, in some implementations of the first aspect, the method further includes: concatenating P data slices that are read into a second data packet. The plurality of data slices include the P data slices, and the second data packet is included in the first data packet.

In some possible implementations, the P data slices are all slices of the first data packet. In other words, after all data slices of the first data packet are completed being read, data slice concatenation is performed.

In some possible implementations, each time after P data slices of one complete piece of data are read, data slice concatenation is performed.

In the foregoing technical solution, after the data slices are completed being read, data slice concatenation is performed, to ensure integrity of a data packet.

With reference to the first aspect, in some implementations of the first aspect, the method further includes: detecting whether read/write time sequences of a first interface and a second interface are consistent, where the first interface is an interface between the first storage device and a first controller, the second interface is an interface between the second storage device and a second controller, the first controller and the second controller are configured to control the data slice to be read from and/or to be written into the storage device, and the M storage devices include the first storage device and the second storage device; and when the read/write time sequences of the first interface and the second interface are inconsistent, aborting writing or reading of the data slice, and reporting an error, where the error indicates that the read/write time sequences of the first interface and the second interface are inconsistent.

In some possible implementations, the plurality of data slices are written into M storage devices by using N controllers, where N is a positive integer less than or equal to M.

In some possible implementations, each controller controls one storage device, or each controller controls at least two storage devices. This is not specifically limited in this application.

In some possible implementations, that the read/write time sequences are consistent means that a difference between read/write time sequences of any two interfaces is zero, or a difference between read/write time sequences of any two interfaces does not exceed a read/write cycle.

In the foregoing technical solution, the read/write time sequences of the interfaces between the M storage devices and the controller that controls the M storage devices are detected. This ensures that the read/write time sequences of the interfaces are consistent, to ensure highest data read/write efficiency.

In this application, data reading from and writing into one of the M storage devices are further supported. Multi-channel concurrent reading from and writing into the M storage devices are alternatively supported. In other words, reading/writing of data from/into the M storage devices do not affect each other.

According to a second aspect, an apparatus for controlling data reading/writing is provided. The apparatus includes: an obtaining unit, configured to obtain a first data packet; and a processing unit, configured to divide the first data packet into a plurality of data slices, and write the plurality of data slices in parallel into M storage devices, where M is a positive integer greater than or equal to 2.

With reference to the second aspect, in some implementations of the second aspect, the processing unit is further configured to: determine a first address of a first storage device based on sizes of the plurality of data slices and an offset address of the first storage device, and determine a second address of a second storage device based on the sizes of the plurality of data slices and an offset address of the second storage device, where the M storage devices include the first storage device and the second storage device; and write a first data slice into the first address at a first speed, and write a second data slice into the second address at a second speed.

With reference to the second aspect, in some implementations of the second aspect, maximum clock frequencies of the first storage device and the second storage device are different.

With reference to the second aspect, in some implementations of the second aspect, the processing unit is further configured to: write a data slice other than the first data slice in the plurality of data slices into the first storage device.

With reference to the second aspect, in some implementations of the second aspect, when an error occurs in the second data slice read from the second storage device, the processing unit is further configured to: read the second data slice from the first storage device.

With reference to the second aspect, in some implementations of the second aspect, the processing unit is further configured to: read the plurality of data slices in parallel from the M storage devices.

With reference to the second aspect, in some implementations of the second aspect, the processing unit is further configured to: read the plurality of data slices in parallel from different addresses of the M storage devices.

With reference to the second aspect, in some implementations of the second aspect, the processing unit is further configured to: concatenate P data slices that are read into a second data packet. The plurality of data slices include the P data slices, and the second data packet is included in the first data packet.

With reference to the second aspect, in some implementations of the second aspect, the processing unit is further configured to: determine the M storage devices according to a first instruction, where the first instruction is determined based on a capacity required by the first data packet and a read/write speed required by the first data packet.

With reference to the second aspect, in some implementations of the second aspect, the processing further includes: detecting whether read/write time sequences of a first interface and a second interface are consistent, where the first interface is an interface between the first storage device and a first controller, the second interface is an interface between the second storage device and a second controller, the first controller and the second controller are configured to control the data slice to be read from and/or to be written to the storage device, and the M storage devices include the first storage device and the second storage device; and when the read/write time sequences of the first interface and the second interface are inconsistent, aborting writing or reading of the data slice, and reporting an error, where the error indicates that the read/write time sequences of the first interface and the second interface are inconsistent.

According to a third aspect, an apparatus for controlling data reading/writing is provided. The apparatus includes: a transceiver, configured to receive and send a message; a memory, configured to store a program; and a processor, configured to execute the program stored in the memory, where when the program stored in the memory is executed, the processor is configured to perform the method according to any one of the possible implementations of the first aspect.

According to a fourth aspect, a vehicle is provided. The vehicle includes the apparatus according to any one of the possible implementations of the second aspect or the apparatus according to any one of the implementations of the third aspect.

According to a fifth aspect, a computer program product is provided. The computer program product includes computer program code, and when the computer program code is run on a computer, the computer is enabled to perform the method according to any one of the possible implementations of the first aspect.

All or some of the computer program code may be stored in a first storage medium. The first storage medium may be packaged together with a processor, or may be packaged separately from a processor. This is not specifically limited in this embodiment of this application.

According to a sixth aspect, a computer-readable medium is provided. The computer-readable medium stores program code, and when the computer program code is run on a computer, the computer is enabled to perform the method according to any one of the possible implementations of the first aspect.

According to a seventh aspect, a chip system is provided. The chip system includes a processor configured to invoke a computer program or computer instructions stored in a memory, so that the processor performs the method according to any one of the possible implementations of the first aspect.

With reference to the seventh aspect, in a possible implementation, the processor is coupled to the memory through an interface.

With reference to the seventh aspect, in a possible implementation, the chip system further includes a memory. The memory stores a computer program or computer instructions.

### BRIEF DESCRIPTION OF DRAWINGS

FIG. 1 is a schematic diagram of an application scenario of a method for controlling data reading/writing according to an embodiment of this application;
FIG. 2 is a schematic block diagram of an apparatus for controlling data reading/writing according to an embodiment of this application;
FIG. 3 is a schematic flowchart of a method for controlling data reading/writing according to an embodiment of this application;
FIG. 4 is a schematic flowchart of a method for controlling data writing according to an embodiment of this application;
FIG. 5 is a schematic flowchart of a method for controlling data reading according to an embodiment of this application;
FIG. 6 is a schematic block diagram of a data interleaving module for controlling data reading/writing according to an embodiment of this application;
FIG. 7 is a schematic diagram of an application scenario of a method for controlling data reading/writing according to an embodiment of this application;
FIG. 8 is a schematic diagram of another application scenario of a method for controlling data reading/writing according to an embodiment of this application;
FIG. 9 is a schematic diagram of still another application scenario of a method for controlling data reading/writing according to an embodiment of this application;
FIG. 10 is a schematic flowchart of a method for improving a function security level in a dual-chip redundancy mode according to an embodiment of this application;
FIG. 11 is a schematic diagram of yet another application scenario of a method for controlling data reading/writing according to an embodiment of this application;
FIG. 12 is a schematic diagram of a storage address of data in a flash device according to an embodiment of this application;
FIG. 13 is a schematic diagram of a detection result of an interface time sequence of a method for controlling data reading/writing according to an embodiment of this application;
FIG. 14 is a schematic diagram of a clock domain of an apparatus for controlling data reading/writing according to an embodiment of this application;
FIG. 15 is a schematic diagram of a waveform detection result of an apparatus for controlling data reading/writing with a plurality of clock domains according to an embodiment of this application;
FIG. 16 is a schematic flowchart of a method for controlling data reading/writing according to an embodiment of this application;
FIG. 17 is a schematic block diagram of an apparatus for controlling data reading/writing according to an embodiment of this application; and
FIG. 18 is a schematic block diagram of an apparatus for controlling data reading/writing according to an embodiment of this application.

### DESCRIPTION OF EMBODIMENTS

The following describes technical solutions of embodiments in this application with reference to accompanying drawings.

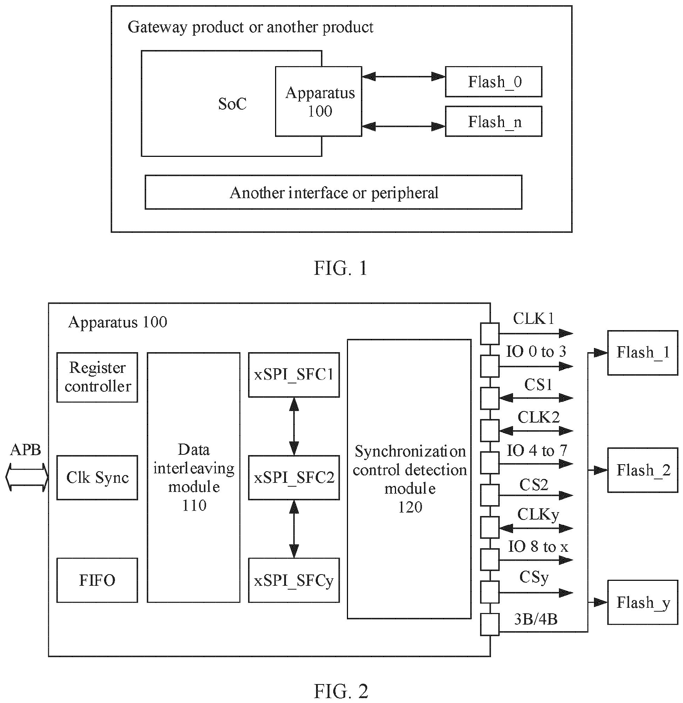

FIG. 1 is a schematic diagram of an application scenario of an apparatus 100 for controlling data reading/writing according to an embodiment of this application. As shown in FIG. 1, the apparatus 100 may be disposed in a system on chip (system on chip, SoC) of a product such as a gateway product, a vehicle dynamic control (vehicle dynamic control, VDC) system, or a mobile data center (mobile data center, MDC), and is configured to communicate with a non-volatile flash memory. In some possible implementations, the SoC communicates with the apparatus 100 through a peripheral bus (advanced peripheral bus, APB).

More specifically, a schematic structure of the apparatus 100 is shown in FIG. 2. The apparatus 100 may include a plurality of xSPI controllers (xSPI_SFC), for example, xSPI_SFC1, xSPI_SFC2, xSPI_SFCy, and/or the like. The xSPI may be any one of an SPI, a QSPI, or an OSPI, or may be an SPI of another type. This is not limited in this embodiment of this application. In some possible implementations, each xSPI controller corresponds to one flash device, or each xSPI controller may correspond to a plurality of flash devices. Further, the plurality of xSPI controllers are configured to control writing/reading of data in parallel into/from the plurality of flash devices, so that a data read/write speed can be improved. In a data read/write process, a data interleaving module 110 may be configured to control division, allocation, and concatenation of data slices, and data error check and recovery. The data slice is a slice (slice) formed by data division by using a specific size, and is essentially fragmentary data. After all data slices of one piece of data are concatenated, the data may be restored. A synchronization control detection module 120 protects and detects a read/write time sequence of the data, and the synchronization control detection module 120 may further improve a function security level in the data read/write process by using a lockstep (LockStep) technology.

The "interleaving" in this application means that two or more xSPIs are configured to control the data to be read/written in parallel from/into two or more flash devices.

In some possible implementations, the apparatus 100 may be used in various handheld devices, wearable devices, computing devices, or other processing devices connected to a wireless modem that have a wireless communication function, and various forms of terminals, mobile stations, terminals, user equipment, and the like. For example, the apparatus 100 may be used in a mobile phone, a computer, a watch, a band, a wireless headset, or an electronic wallet. Alternatively, the apparatus 100 may be further used in a vehicle. This is not specifically limited in this embodiment of this application. In some possible implementations, the vehicle may be configured to be in a full or partial self-driving mode. Specifically, the vehicle may include one or more different types of vehicles, or may include one or more different types of transportation tools or movable objects that are operated or moved on land (for example, a road, a highway, or a railway), on water (for example, a waterway, a river, or an ocean), or in space. For example, the vehicle may include a car, a bicycle, a motorcycle, a train, a subway, an airplane, a ship, an aircraft, a robot, or another type of transportation tool or movable object. This is not particularly limited in this embodiment of this application.

The components in FIG. 1 and FIG. 2 are merely examples. During actual application, components in the foregoing apparatuses or modules may be added or deleted according to an actual requirement. FIG. 1 and FIG. 2 should not be construed as a limitation on this embodiment of this application.

As described above, as a requirement for a program startup speed becomes higher, a requirement for a data read/write speed also becomes higher. For example, in the vehicle field, there is a strict requirement for a sending completion time of a first frame of a vehicle controller area network (controller area network, CAN) on an in-vehicle gateway. Usually, it is required that sending of a first frame of CAN network management packet be completed within 100 ms after the vehicle is powered on, to wake up another electronic control unit (electronic control unit, ECU) device. In addition, gateway products need to implement secure startup to meet information security requirements. According to an overall analysis of a startup time, a time left for loading an image package is less than 15 ms (for a 1 MB image package data) other than a time required for secure startup, hardware peripheral initialization, an operating system, and a software stack. Currently, a program flash (program flash, PFLASH) and a data flash (data flash, DFLASH) that are configured to carry the image package and that are in most commercial chips are integrated in a microcontroller unit, (microcontroller unit, MCU). However, due to process, area, and manufacturing process limitations, storage capacities of the program flash and the data flash cannot be expanded without limitation. A maximum specification is usually 16 MB. After upgrading of an A/B area is supported, an available space is less than 8 MB. This capacity cannot meet current increasing gateway requirements. The gateway carries functions of CAN/ETH packet routing, signal processing, and even domain controller. From a perspective of a forwarding entry alone, service expansion of the gateway is greatly affected.

For another example, in a system based on an automotive open system architecture (automotive open system architecture, AUTOSAR), some tasks (TASKs), application software components (SWCs), and runnable (Runnable) entities may be synchronized when a non-volatile memory (Non-Volatile memory, NvM) storage service is used. If a time required for reading/writing of data from/into a flash device exceeds a running time allocated by a system to a task, an SWC, or a runnable, a time of a low-priority task is occupied, damaging real-time performance of the system.

For still another example, in a process of upgrading an over-the-air technology (Over-the-Air Technology, OTA) by using an in-vehicle Ethernet DoIP protocol (Ethernet diagnostic communication over Internet protocol, ETH-DoIP), if a speed of a diagnosis port of an on-board diagnostics (on-board diagnostics, OBD) is 1 Gbps, because 1 Gbps is higher than a speed of writing data into a flash device, a bottleneck of an upgrade speed is mainly reflected by a speed of writing data into a flash device. For example, if a total write speed of the existing QSPI solution is 280 Mbps, the upgrade speed is not higher than 280 Mbps.

For another example, in a terminal device such as a mobile phone or a computer, a minimum system may also exist. For example, a program in a trusted execution environment (trusted execution environment, TEE) in the mobile phone is started based on data reading/writing in a flash device, and a basic input/output system (basic input/output system, BIOS) in the computer is also run based on data reading/ writing in a flash device. Therefore, the data read/write speed is improved, so that startup time of these systems is also significantly reduced.

In view of this, embodiments of this application provide a method and an apparatus for controlling data reading. Two or more serial peripheral interface (serial peripheral interface, SPI) controllers are controlled in an interleaving manner to complete reading/writing in parallel of stored data from/into an external flash device, to improve a data read/write speed.

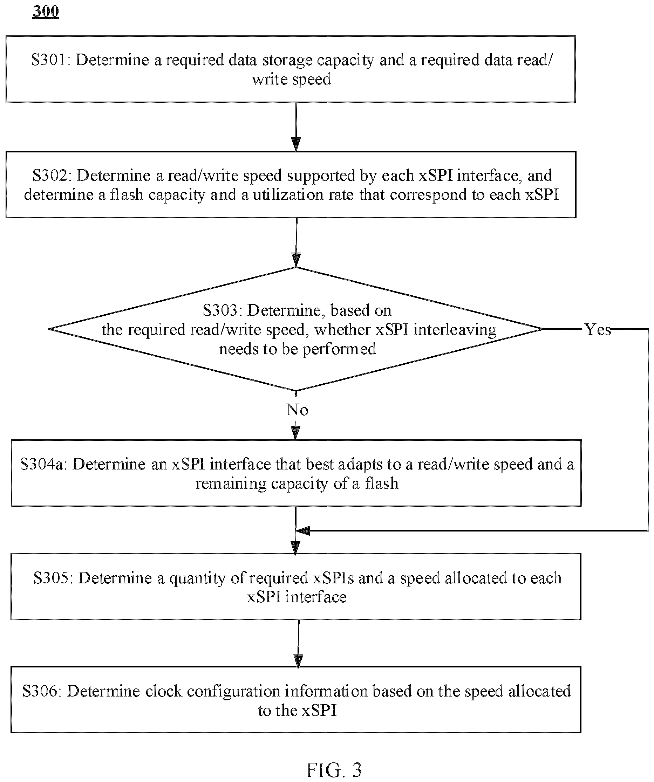

A quantity of xSPIs required by the apparatus 100 for performing data interleaving is preconfigured by a memory allocation module. To be specific, the memory allocation module determines, according to a data read/write speed requirement, a quantity of xSPIs that need to be interleaved, a speed allocated to each xSPI, and a clock configuration. The module may further determine, based on a required data storage capacity, whether concatenation needs to be performed on flash devices, and a quantity of flash devices required for concatenation. Specifically, FIG. 3 shows a method for configuring a mode by the memory allocation module. Steps or operations of the method shown in FIG. 3 are merely examples for description. In embodiments of this application, other operations or variations of the operations in FIG. 3 may be further performed. The method 300 includes the following steps.

S301: Determine a required data storage capacity and a required data read/write speed.

For example, if the required data storage capacity is x MB, and data reading/writing is required to be completed within y ms, the required data read/write speed is S1=x MB/y ms.

S302: Determine a read/write speed supported by each xSPI interface, and determine a flash capacity and a utilization rate that correspond to each xSPI.

S303: Determine, based on the required read/write speed, whether xSPI interleaving needs to be performed.

Specifically, it is determined whether the read/write speed of each xSPI interface is greater than or equal to the required read/write speed S1. If read/write speeds of all xSPI interfaces are less than the required read/write speed S1, S305 is performed; otherwise, S304 is performed.

S304: Determine an xSPI interface that best adapts to a read/write speed and a remaining capacity of the flash.

Specifically, the remaining capacity of the flash device is an effective capacity that can be used to store data, and is determined based on the capacity and the utilization rate of the flash device. For example, if a capacity of Flash_0 is 60 MB, 30% of the capacity is allocated to a first image package, and the remaining 70% of the capacity is not allocated, the remaining capacity of the Flash_0 is 42 MB.

In some possible implementations, if read/write speeds of N xSPI interfaces are all greater than or equal to the required read/write speed S1, M xSPIs whose remaining capacities of flash devices are greater than or equal to the required data storage capacity x MB are selected from flash devices corresponding to the N xSPIs. Herein, N >= 2, and M <= N. Further, an xSPI whose supported read/write speed is closest to the required read/write speed S1 is selected from the M xSPIs.

In some possible implementations, if the remaining capacities of the flash devices corresponding to the N xSPIs are all less than the required data storage capacity x MB, a quantity of flash devices that require to be concatenated is determined based on the capacity and the utilization rate of the flash devices, and then S305 is proceeded to be performed.

S305: Determine a quantity of required xSPIs and a speed allocated to each xSPI interface.

For example, when the read/write speeds of all the xSPI interfaces are less than the required read/write speed S1, the quantity of required xSPIs and the speed allocated to each xSPI may be determined based on the required read speed S1 and the read/write speed supported by the xSPI.

For example, if the read/write speeds of the N xSPI interfaces are all greater than or equal to the required read/write speed S1, but the remaining capacities of the flash devices corresponding to the N xSPIs cannot meet the required data storage capacity x MB, the quantity of required xSPIs and the speed allocated to each xSPI are determined based on the remaining capacities of the N flash devices and the required data storage capacity x MB.

S306: Determine clock configuration information based on the speed allocated to the xSPI.

In some possible implementations, if n xSPIs are required to be interleaved, data that requires to be read/written may be equally divided into n parts. In other words, sizes of data that each xSPI is responsible for reading/writing are the same. That is, the size is x MB/n. Further, a read/write speed that can be contributed by each xSPI is required to be x MB/(y n), that is, S1/n. Further, based on the read/write speed S1/n of each xSPI fragment, clock frequencies of the flash devices corresponding to n xSPIs are set to a same frequency.

Before the xSPI interleaving is performed, if duration required for writing/reading of x MB data into/from the flash device by using one xSPI is t, duration required for reading/writing in an interleaving manner x MB data by using n xSPIs is t/n. In other words, the data read/write speed increases from x/t to nx/t.

In some possible implementations, to support a maximum read/write speed, the clock frequencies of the n flash devices may alternatively be set to different frequencies. However, when the n xSPIs are reading/writing in an interleaving manner, a minimum clock frequency is used as a reference. For example, if three flash devices support different clock frequencies, which are 50 MHz, 70 MHz, and 80 MHz respectively, when xSPIs of the three flash devices are reading/writing in an interleaving manner in parallel, 50 MHz is used by a system clock frequency as a reference. In other words, a supported read/write speed is three times the minimum clock frequency 50 MHz.

After S301 to S306 are completed being performed, xSPI configuration information is determined. The xSPI configuration information includes information such as the quantity of xSPIs that need to be interleaved, the speed allocated to each xSPI, the clock configuration, and the quantity of flash devices that need to be concatenated, so that configuration personnel can preconfigure the xSPI based on the configuration information. In some possible implementations, the required data read/write speed in S301 is a maximum required data read/write speed that is determined according to an actual requirement. For example, in some possible implementations, if a plurality of image packages need to be loaded, the maximum required data read/write speed is determined based on a first image package that needs a highest loading speed in the plurality of image packages. In some possible implementations, an image package that is actually loaded is not the first image package, but an image package that has a low requirement for a loading speed. Therefore, during data reading/writing, it is possible that not all the foregoing preconfigured xSPIs need to be used. In this case, S301 to S306 may alternatively be performed based on data actually read/written and a read/write speed required by the data to determine second xSPI configuration information, and the configuration information is sent to the apparatus 100, so that the apparatus 100 controls data reading/writing.

According to the method for controlling data reading/writing provided in this embodiment of this application, configuration information such as a quantity of required xSPIs, a speed allocated to each xSPI, and a clock configuration of a flash device can be determined in advance based on a required data read/write speed and a required data read/write capacity, so that data reading/writing can be performed based on the configuration information. This improves a data read/write speed.

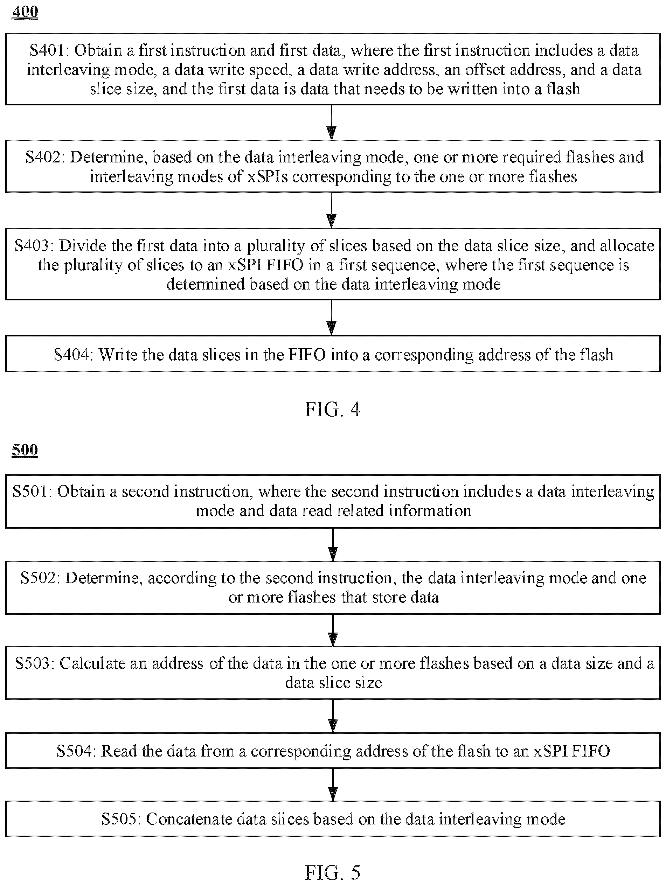

FIG. 4 is a schematic flowchart of a method for controlling data reading/writing according to an embodiment of this application. The method shown in the procedure may be applied to the apparatus shown in FIG. 1, or may be performed by the apparatus 100 shown in FIG. 2. This embodiment of this application is not limited thereto. Steps or operations of the method for controlling data reading/writing shown in FIG. 4 are merely examples. In embodiments of this application, other operations or variations of the operations in FIG. 4 may be further performed. More specifically, the method 400 is a data write procedure, and the method 400 includes the following steps.

S401: Obtain a first instruction and first data, where the first instruction includes a data interleaving mode, a data write speed, a data write address, and a data slice size, and the first data is data that needs to be written into a flash.

S402: Determine, based on the data interleaving mode, one or more required flashes and interleaving modes of xSPIs corresponding to the one or more flashes.

In some possible implementations, a single xSPI can meet a requirement for a data write speed. In this case, the data interleaving mode may be a single-chip read/write mode, and the apparatus 100 may determine one xSPI based on the data interleaving mode.

In some possible implementations, a single xSPI can meet a requirement for a data write speed. However, to ensure data reliability, the first data may be written into two or more flash devices. In this case, the data interleaving mode may be a dual-chip or multi-chip redundancy interleaving read/write mode, and the apparatus 100 may determine one or more xSPIs based on the data interleaving mode.

In some possible implementations, a single xSPI cannot meet a requirement for a data write speed, and two or more xSPIs are required to control data writing. In this case, the data interleaving mode may be a dual-chip or multi-chip interleaving read/write mode, and the apparatus 100 may determine one or more xSPIs based on the data interleaving mode.

In some possible implementations, after determining the data interleaving mode, the apparatus 100 stores the first data in a data register, and stores a data write address of the first data in an address register. The data write address is not an address for actually writing data into the flash device. In some possible implementations, it is determined, based on the data write address and an offset address, the first data that is actually stored in the flash device.

For example, the data slice size may be 8 bits, 16 bits, or 64 bits. This is not specifically limited in this embodiment of this application.

In some possible implementations, the data write address is determined based on the data interleaving mode and the data slice size.

S403: Divide the first data into a plurality of slices based on the data slice size, and allocate the plurality of slices to an xSPI first input first output (first input first output, FIFO) memory in a first sequence, where the first sequence is determined based on the data interleaving mode.

For example, if the data interleaving mode is the single-chip read/write mode, the data slices are allocated to an enabled xSPI FIFO based on an order existing before original data is sliced. In other words, the first sequence is a sequential allocation sequence.

For example, if the data interleaving mode is an interleaving read/write mode, the data slices are sequentially allocated to two or more xSPI FIFOs in a cross manner. For example, the original data is divided into 18 data slices: a slice 0 to a slice 17. If the dual-chip interleaving mode is used, the slice 0 is allocated to an xSPI1, the slice 1 is allocated to an xSPI2, the slice 2 is allocated to the xSPI1, the slice 3 is allocated to the xSPI2, and so on. If the triple-chip interleaving mode is used, the slice 0 is allocated to an xSPI1, the slice 1 is allocated to an xSPI2, the slice 2 is allocated to an xSPI3, the slice 3 is allocated to the xSPI1, the slice 4 is allocated to the xSPI2, the slice 5 is allocated to the xSPI3, and so on. In other words, the first sequence is a cross allocation sequence.

For example, if the data interleaving mode is a redundancy interleaving read/write mode, the data slices are sequentially allocated to two or more xSPI FIFOs simultaneously. For example, the original data is divided into 18 data slices: a slice 0 to a slice 17. If the dual-chip redundancy interleaving read/write mode is used, after data replication, the slice 0 is allocated to xSPI1 and xSPI2, the slice 1 is allocated to xSPI1 and xSPI2, and so on. In other words, the first sequence is a parallel sequential allocation sequence.

S404: Fetch a data slice from the FIFO, and write the data slice into a corresponding address of the flash based on a first address, where the first address is determined based on the data slice size, and the offset address and the data interleaving mode in the first instruction.

In some possible implementations, an offset address of each flash device is configured according to the first instruction by using a control register. Two flash devices are used as examples. An offset address Channel0_Addr_Offset of a Flash _1 may be set to 0 and an offset address Channel1_Addr_Offset of a Flash_2 may be set to 0x1000. That is, the offset is 4 KB. Further, based on the offset address and the data write address, a specific address at which the data is written into each flash device is determined, or a specific address at which data is read from each flash device is determined. For example, the data write address is AddrReg. The specific address at which data is written into the Flash_1 is AddrReg+Channel0_Addr_Offset, and the specific address at which data is written into the Flash_2 is AddrReg+Channel1_Addr_Offset.

In some possible implementations, the first address at which the data is written into the flash device may be directly determined based on the data slice size and the offset address of the flash device.

For example, if the data interleaving mode is the single-chip read/write mode, the first address at which the data is written into the flash device is determined in an address ascending manner. For example, if the offset address of the flash in the first instruction is 0x2000, the data slice size is 16 bits, and the original data is divided into 18 data slices: the slice 0 to the slice 17, a data write address of the slice 0 is 0x2000+16bit*0/8, an address of the slice 1 is 0x2000+16bit* 1/8, an address of the slice 2 is 0x2000+16bit*2/8, and so on. In other words, the first address is a sequential allocation address.

For example, if the data interleaving mode is an interleaving read/write mode, the data is fetched from the xSPI FIFO, and a first address of each xSPI is determined in an address ascending manner. A base address of a write address of each xSPI is determined by the data write address in the first instruction. For example, in a triple-chip interleaving mode, a data slice size is 16 bits, and data write addresses in the first instruction are separately 0x2000, 0x3000, and 0x4000. In this case, addresses at which a first piece of data is written into the xSPI1, the xSPI2, and the xSPI3 are 0x2000+16bit*0/8, 0x3000+16bit*0/8, and 0x4000+16bit*0/8, addresses at which a second piece of data is written into the xSPI1, the xSPI2, and the xSPI3 are 0x2000+16bit* 1/8, 0x3000+16bit* 1/8 and 0x4000+16bit* 1/8, addresses at which a third piece of data is written into the xSPI1, the xSPI2, and the xSPI3 are 0x2000+16bit*2/8, 0x3000+16bit*2/8, and 0x4000+16bit*2/8, and so on.

For example, if the data interleaving mode is a redundancy interleaving read/write mode, a write address in the redundancy interleaving read/write mode is determined based on the offset address of the flash device, the data slice size, and a quantity of write times in the first instruction. Specifically, for the method for determining a write address of any one of flash devices in the dual-chip or multi-chip mode, refer to that in the single-chip read/write mode, and details are not described herein again.

In a dual-chip/multi-chip interleaving mode or a dual-chip/multi-chip redundancy interleaving mode, to ensure a maximum read/write speed, it needs to be ensured that read/write time sequences of two or more xSPI controller interfaces are consistent or a difference does not exceed a read/write cycle. In some possible implementations, clock frequencies of the two or more xSPI controllers may be set to a same clock frequency to implement consistency of read/write time sequences of the interfaces. Alternatively, read/write time sequences of the two or more xSPI controller interfaces may be controlled to be consistent in another manner. This is not specifically limited in this embodiment of this application. Further, to ensure that the time sequences of the two or more xSPI controller interfaces are consistent, whether the time sequences of the interfaces are consistent may be detected through synchronization control. When the time sequences of the interfaces are inconsistent, an error is reported to a software service, and a read/write process is interrupted. After the clock frequencies are corrected by the software service, the read/write process is attempted to be restored.

According to the method for controlling data reading/writing provided in this embodiment of this application, a plurality of data write modes are supported. In a case in which a requirement for a data write speed is high, a data write speed may be increased by using a dual-chip or multi-chip interleaving mode. In a case in which a requirement for data reliability is high, data reliability may be increased by using a redundancy interleaving mode, and an error probability in a data read process is reduced.

FIG. 5 is a schematic flowchart of a method for controlling data reading/writing according to an embodiment of this application. The method shown in the procedure may be applied to the apparatus shown in FIG. 1, or may be performed by the apparatus 100 shown in FIG. 2. This embodiment of this application is not limited thereto. Steps or operations of the method for controlling data reading/writing shown in FIG. 5 are merely examples. In embodiments of this application, other operations or variations of the operations in FIG. 5 may be further performed. More specifically, the method 500 is a data read procedure, and the method 500 includes the following steps.

S501: Obtain a second instruction, where the second instruction includes a data interleaving mode and data read related information.

Specifically, the data read related information includes a flash device in which data to be read is stored, a data size, a data slice size, and a required read speed.

In some possible implementations, the data slice size is a data slice size stored in a data write process, or may be a data slice size configured by a system. This is not specifically limited in this embodiment of this application.

S502: Determine, according to the second instruction, the data interleaving mode and one or more flashes that store data.

S503: Calculate an address of the data in one or more flashes based on the data size and the data slice size.

For example, if the data interleaving mode is a single-chip read/write mode, and the data is stored in a first flash, a quantity of slices may be determined based on dividing the data size by the data slice size, and then an address of the data slice in the first flash is determined based on the quantity of slices.

For example, if the data interleaving mode is a dual-chip or multi-chip interleaving read/write mode, a quantity of slices may be determined based on dividing the data size by the data slice size, and then an address of the data slice in the flash is determined based on dividing the quantity of slices by a quantity of flashes. In some possible implementations, data is stored in the first flash and a second flash, a data size is 16 MB, and a slice size is 1 MB. In this case, a quantity of data slices is 16. Therefore, it may be determined that eight data slices are stored in each of the first flash and the second flash. Further, addresses at which the data is stored in the first flash and the second flash are determined based on the quantity of slices and an intra-page offset address. In some possible implementations, the intra-page offset address is determined based on an address cached in an address register.

For example, if the data interleaving mode is a dual-chip redundancy interleaving read/write mode, a quantity of slices may be determined based on dividing the data size by the data slice size, and then addresses of the data slices in the first flash and the second flash are determined based on the quantity of slices.

S504: Read the data from a corresponding address of the flash to an xSPI FIFO.

For example, the data interleaving mode is a dual-chip redundancy interleaving read/write mode, and a read address is determined by using a data slice size, a quantity of slices, and an offset address cached in a register. In some possible implementations, when two flash devices store same data in a same address and a slice size is 16 bits, an xSPI1 reads data of a first slice from an address 16bit*(1-1)/8bit, and an xSPI2 reads data of a second slice from an address 16bit*(2-1)/8bit; and the xSPI1 reads data of a third slice from an address 16bit*(3-1)/8bit, and the xSPI2 reads data of a fourth slice from an address 16bit*(4-1)/8bit, and so on. When an error occurs in reading in one of paths (for example, a first path), the other path (a second path) is used to read data of a corresponding address. In some possible implementations, if offset addresses of flash devices in two paths are the same, the other path is used to read data of the same address. In some possible implementations, if offset addresses of flash devices in two paths are different, the other path is used to read data of an address that is based on the offset address deviation.

For example, the data interleaving mode is a dual-chip or multi-chip interleaving read/write mode, and a read address is determined by using a data slice size, a quantity of slices, and an offset address cached in a register. In some possible implementations, an xSPI in each path starts to read data from a provided offset address, and calculates an address deviation of next reading based on a quantity of data that can be read at a time. For example, if 16-bit data can be read at a time, an address is increased by 2 each time reading is completed. Data corresponding to slice sizes are completed to be read, to complete one read operation of sliced data.

For example, the data interleaving mode is a single-chip read/write mode. A possible implementation in the single-chip read/write mode is as follows. An xSPI in one path starts to read data from a provided offset address. Data of a corresponding slice size is continued to be read until completion, to complete a read operation of sliced data.

S505: Concatenate data slices based on the data interleaving mode.

Specifically, the data slices are concatenated and reorganized based on a sequence existing before the data is divided. In some possible implementations, the data slices are concatenated based on a specified data concatenation size.

According to the method for controlling data reading/writing provided in this embodiment of this application, a plurality of data read modes are supported. In a dual-chip or multi-chip interleaving mode, required data may be read in parallel from two or more corresponding flash devices according to a data read instruction, improving a data read speed. In a case in which the data is read in a redundancy interleaving mode, when an error occurs in data in the flash device in one path, the same data may be read from a same address (based on an offset address deviation) of the flash device in the other path, improving data reliability. In this way, an error probability in a data read process is reduced.

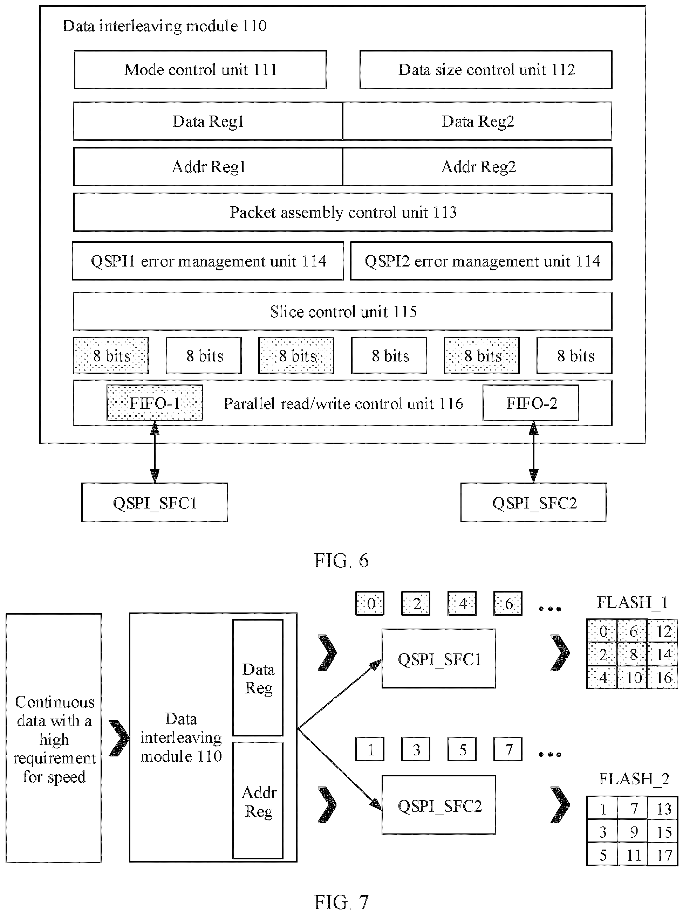

With reference to FIG. 6, the following uses interleaving of two QSPI flash controllers (hereinafter referred to as QSPI_SFC) as an example to describe a function of each unit of a data interleaving module 110 in performing the foregoing method 400 or method 500. The components in FIG. 6 are merely examples. During actual application, components in the foregoing apparatuses or modules may be added or deleted according to an actual requirement. FIG. 6 should not be construed as a limitation on embodiments of this application. Specifically, the data interleaving module 110 shown in FIG. 6 includes the following units: a mode control unit 111, a data size control unit 112, a data register (Data Reg), an address register (Addr Reg), a packet assembly control unit 113, a QSPI error management unit 114, a slice control unit 115, and a parallel read/write control unit 116.
(1) The mode control unit 111 is configured to select a proper read/write mode according to a first instruction or a second instruction.

When the apparatus 100 includes two QSPI controllers, a data interleaving mode supported by the apparatus includes the following four types:
0: a dual-chip interleaving read/write mode;
1: a single-chip 1 read/write mode;
2: a single-chip 2 read/write mode;
3: a dual-chip redundancy interleaving read/write mode; and
4: a dual-chip independent mode.

Dual-chip interleaving reading/writing in mode 0 indicates that divided data is separately written into two nor flashes or read from two nor flashes under control of the QSPI_SFC. In some possible implementations, as shown in FIG. 7, in a data write process, one piece of continuous data is divided into an even number of slices, for example, a slice 0 to a slice 17. The data interleaving module 110 sequentially allocates the data slices to two QSPI_SFCs in a cross manner. For example, the slice 0, the slice 2, ..., and the slice 16 are allocated to a QSPI_SFC1, and the remaining data slices are allocated to a QSPI_SFC2. Then, the two QSPI_SFCs store slices into a same address of the flash based on a same time sequence. For example, at a same moment, the QSPI_SFC1 and the QSPI_SFC2 store the slice 0 and the slice 1 into an address 1 of the flash separately, and so on. If the data is divided into an even number of slices, space occupied by the two flashes is the same. If the data is divided into an odd number of slices, the Flash _1 occupies one more space of sliced data than the Flash_2. The data read process may be considered as an inverse process of the data write process. In other words, at a same moment, the QSPI_SFC1 and the QSPI_SFC2 respectively read the slice 0 and the slice 1 from the address 1 of the Flash_1 and the address 1 of the Flash_2, and so on. A data read/write speed in the dual-chip interleaving mode is twice that in the single-chip flash mode.

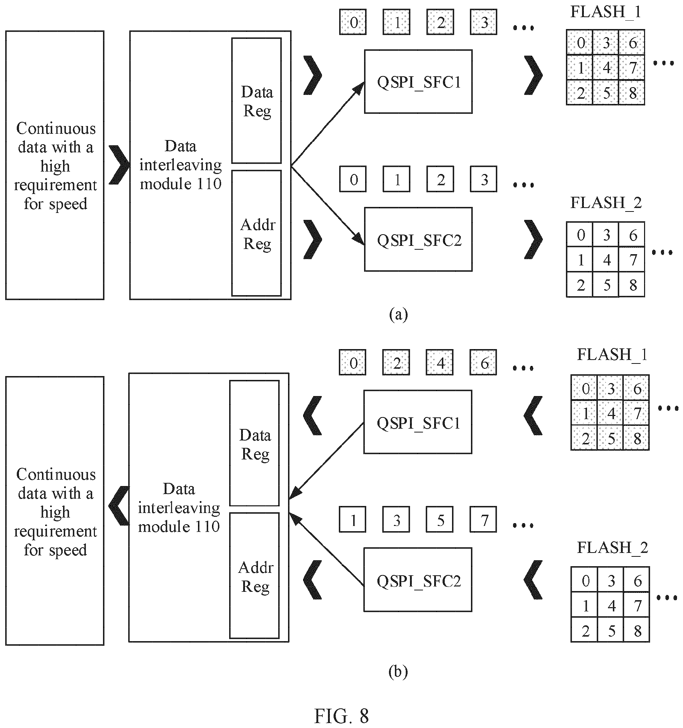

The dual-chip redundancy interleaving read/write mode in mode 3 can ensure reliability in a data read/write process. Specifically, as shown in FIG. 8, different from that in the dual-chip interleaving read/write mode, in the dual-chip redundancy interleaving read/write mode, in a data write process, after one piece of continuous data is divided into a plurality of slices, the slices are not allocated to two QSPI_SFCs in a cross manner, but same data slices are written into a same address of the Flash_1 and the Flash_2 at the same moment. Details are shown in (a) in FIG. 8. In this mode, same data is stored in the same address of the two flashes. In other words, after the data is written, twice the storage space is occupied, and a data write speed is the same as the data write speed in the single-chip flash mode.

Further, in the data read process, addresses of the two flashes are calculated based on a length of the read data, and data is read from different addresses of the two flashes at the same time. Details are shown in (b) in FIG. 8. For example, 12 pieces of data need to be read from the flash. In this case, the data interleaving module 110 needs to read six times in total. Addresses corresponding to the Flash_1 are 0, 2, 4, 6, 8, and 10, and addresses corresponding to the Flash_2 are 1, 3, 5, 7, 9, and 11. In some possible implementations, a corresponding algorithm may be set as follows.

The address of the Flash_1 is offset1+2n, where n=0, 1, 2, 3, 4, 5, and the like.

The address of the Flash_2 is offset2+2n+1, where n=0, 1, 2, 3, 4, 5, and the like. Herein, offset1 and offset2 are respectively intra-page offset addresses of the Flash _1 and the Flash_2, and n is a quantity of data slices.

When an error occurs in data reading in one path, the interleaving module may use a QSPI_SFC in the other path to read data in a corresponding address and complete data concatenation. This improves reliability of the entire dual-chip interleaving data reading. The data read speed in this mode is twice the data read speed in the single-chip flash mode.

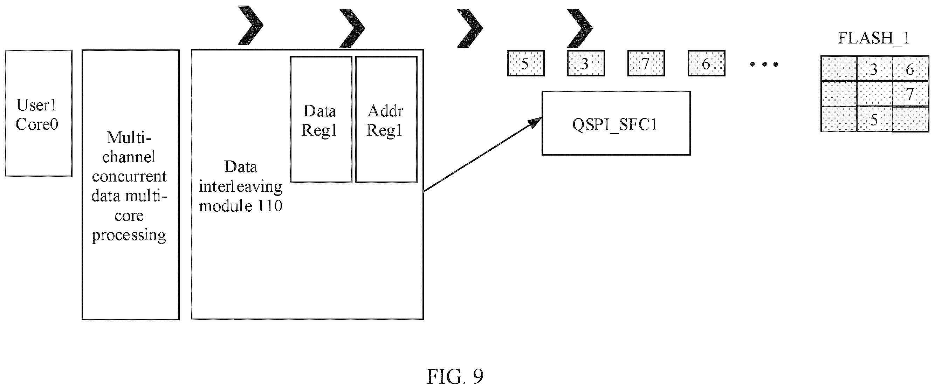

In addition, for the modes 1 and 2, data read/write processes are the same as a read/write process of a single QSPI_SFC controller. For details, refer to FIG. 9. In the single-chip mode, QSPI_SFCs in two paths can perform lockstep to improve a function security level. More specifically, if function security-related data is written into the flash device in a system running process, a function security level of this path increases as function security importance of the data increases.

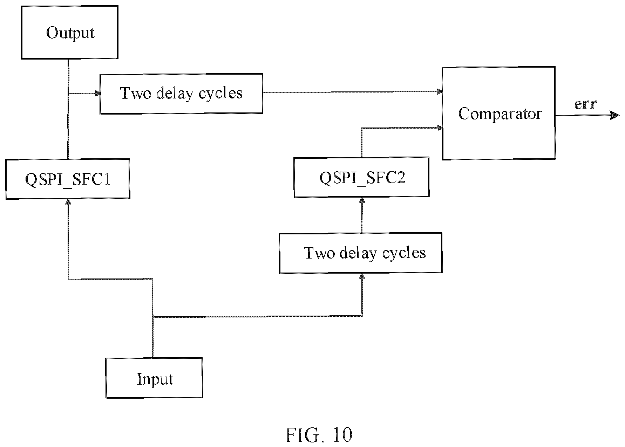

For example, a solution for improving the function security level includes but is not limited to the following.
1. Data is written in a form of double bits. For example, if data to be written is binary 'b10, actual written data is changed to 'b1010.
2. Data is written in a form of redundancy. For example, if hexadecimal data 0xAA needs to be written into an address 0x10, the 0xAA is also written into an address 0x20.
3. A check is added when data is written. For example, if 0xAA needs to be written, an ECC (Error Correcting Code) check or a cyclic redundancy check (cyclic redundancy check, CRC) of several bits is added during actual writing.
4. In a dual-chip redundancy read/write mode, namely, the mode 3, a function security level is improved by using a dual core lockstep (dual core lockstep, DCLS). For example, as shown in FIG. 10, same function security-related data is input into the QSPI_SFC1 and the QSPI_SFC2. Further, the QSPI_SFC1 directly processes the foregoing data and outputs a calculation result 1. The QSPI_SFC2 processes, after two delay cycles, the foregoing data and outputs a calculation result 2. Then a comparator compares a result of the calculation result 1 after two delay cycles with the calculation result 2. When output results are inconsistent, error information is input by the comparator, indicating that an error occurs in a control route in the QSPI_SFC1 or the QSPI_SFC2.

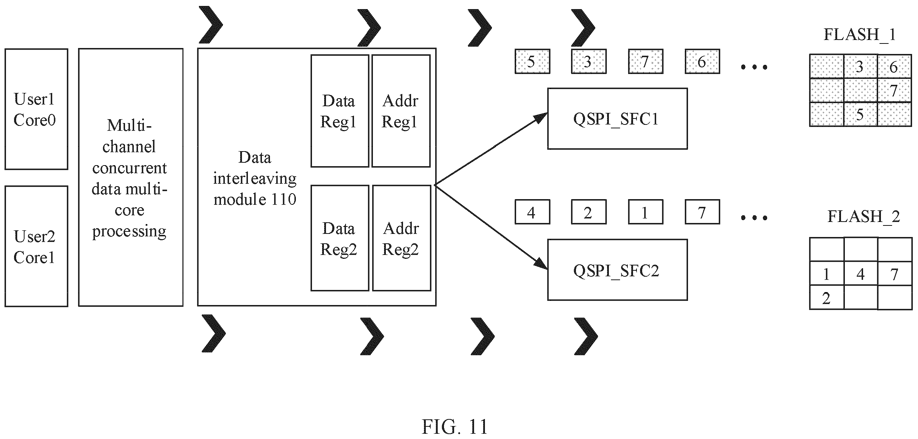

Further, the controllers are independent and do not affect each other, and a memory is completely isolated physically. Therefore, multi-channel concurrent reading/writing may be implemented. This is the mode 4, namely, the dual-chip independent mode. In the dual-chip independent mode, a read/write process of a single channel is the same as that of a single QSPI_SFC controller. As shown in FIG. 11, in a multi-core and multi-user case, when data is written into the flash device, it may be selected that the data may be written into registers Data Reg1 and Data Reg2, so that a final memory that carries the data may be determined. In this mode, data reading is an inverse process of data writing. In addition, due to physical isolation, multi-user and multi-core data read/write processes do not affect each other.

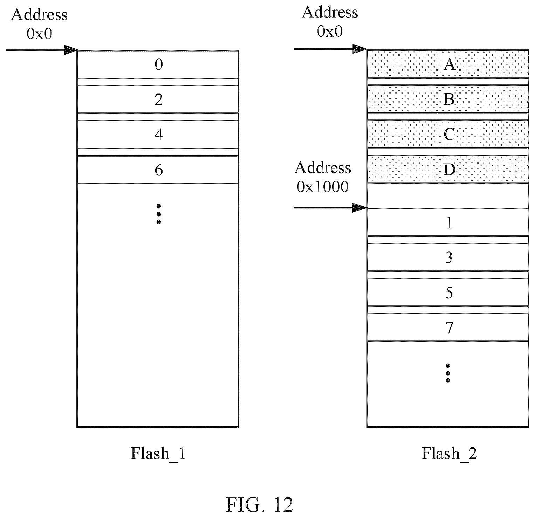

In some possible implementations, the mode 0 to the mode 4 may be used in combination. Specifically, a mode that needs to be used in combination and a storage space corresponding to each mode may be predefined according to a requirement. For example, the mode 0 and the mode 2 are used in combination. The following describes a specific process of using modes in combination with reference to FIG. 12.
1. It is predefined that the mode 0 and the mode 2 are required for use, and 4 KB storage space is reserved for the mode 2.
2. Set an offset 1 in the mode 0 to 0x0 and set an offset 2 to 0x1000.
3. Set an offset in the mode 2 to 0x0.

Further, in an actual use process, when a user wants to write the data slices 0 to 11 into the flash device based on the mode 0, data actually written into the Flash_1 is 0, 2, 4, 6, 8, and 10, and corresponding addresses for storing the data in the Flash_1 are 0x0, 0x1, 0x2, 0x3, 0x4, and 0x5. Data actually written into the Flash_2 is 1, 3, 5, 7, 9, and 11, and corresponding addresses for storing the data in the Flash_2 are 0x1000, 0x1001, 0x1002, 0x1003, 0x1004, and 0x1005.

When the user wants to write the data slices A to D into the flash device based on the mode 2, data actually written into the Flash_2 is A, B, C, and D, and corresponding addresses for storing the data are 0x0, 0x1, 0x2, and 0x3.

When data writing is completed by using the mode 0 and the mode 2, a storage form of the data in the flash is shown in FIG. 12.

(2) The data size control unit 112 is configured to: set a data slice size for the slice control unit 115, and set a packet assembly size after data concatenation for the packet assembly control unit 113. For example, the data slice size and the packet assembly size are set by the user.

(3) The data register is configured to cache data to be read/written.

(4) The address register is configured to temporarily store an address of a memory that is accessed when data is read/written currently.

(5) When the apparatus 100 is in a dual-chip read/write mode, the packet assembly control unit 113 is configured to reorganize, in a data read process, data read from two flash devices into data in a normal sequence. When the apparatus 100 is in a single-chip read/write mode, the unit is configured to sequentially concatenate data of a single slice.

(6) The QSPI error management unit 114 is configured to perform, in a dual-chip data read process, ECC or other error detection on data. When an error is detected, the error is reported to the packet assembly control module, and erroneous data slice is re-read to obtain correct information and assemble a packet.

(7) The slice control unit 115 is configured to: in a data write process, divide original data into data slices based on the data slice size set by the data size control unit, and sequentially allocate the data slices to the QSPI_SFC. Specifically, if the apparatus 100 is in a dual-chip read/write mode, the unit sequentially allocates the data slices to two QSPI_SFCs. If the apparatus 100 is in a single-chip read/write mode, the unit sequentially writes the data slices into a single QSPI_SFC. Data transmission between the data read/write module and the QSPI_SFC is implemented through the FIFO.

(8) The parallel read/write control unit 116 is configured to control read/write interface time sequences of the two QSPI_SFCs. Particularly, if the apparatus 100 is in a dual-chip read/write mode, to ensure maximum read/write efficiency, it needs to be ensured that the read/write time sequences of the two QSPI_SFCs are consistent.

As described above, in some possible implementations, if specifications of the flash devices corresponding to a plurality of QSPI_SFCs are the same, it is considered that clock domains of a plurality of flashes are the same. When the plurality of flashes read/write in parallel, it is considered that read/write interface time sequences of the plurality of QSPI_SFCs are the same.

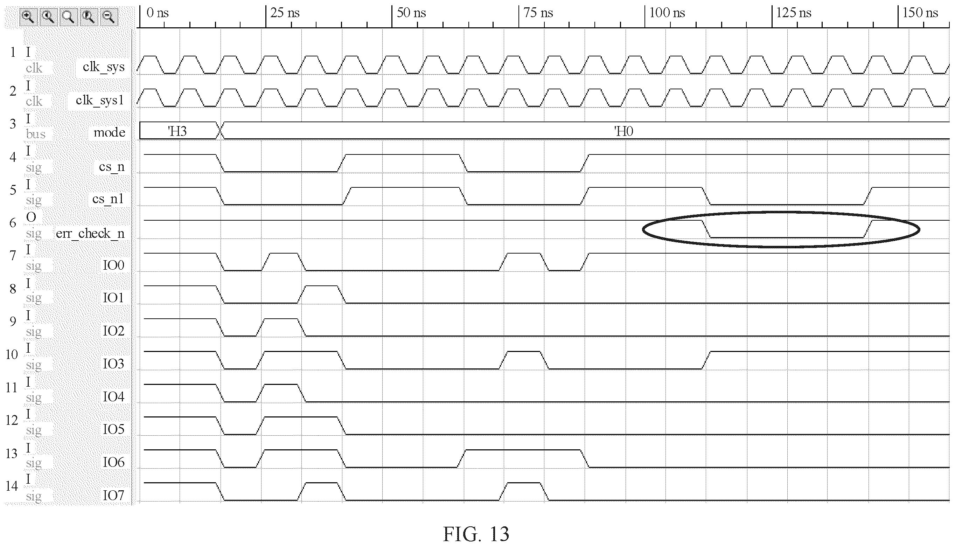

Further, a synchronization control detection module may detect whether the read/write interface time sequences of the plurality of QSPI_SFCs are the same. FIG. 13 is a schematic diagram of detecting read/write interface time sequences of two QSPI_SFCs. It may be seen that, as shown in the part circled in FIG. 13, when the read/write interface time sequences of the two QSPI_SFCs are inconsistent, err_check_n changes to a low level to indicate that an error of time sequence inconsistency occurs. Further, the synchronization control detection module may report the error to the software service and interrupt the read/write process.

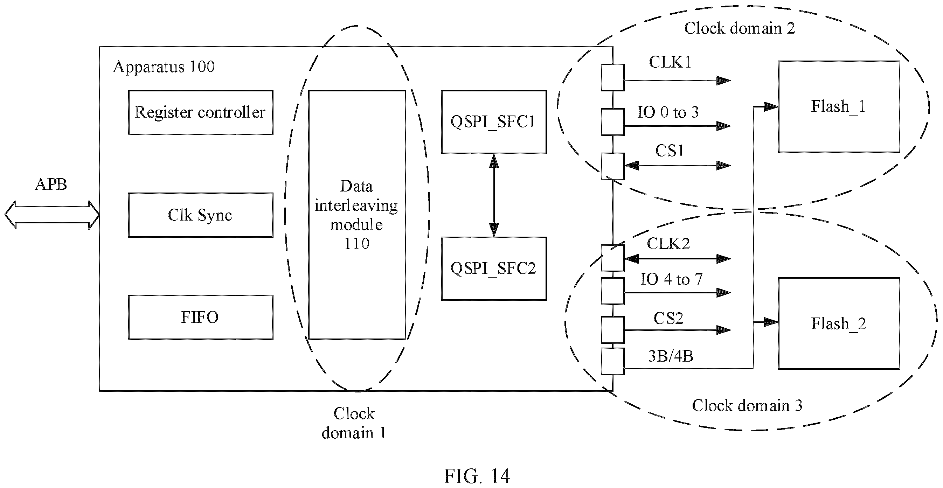

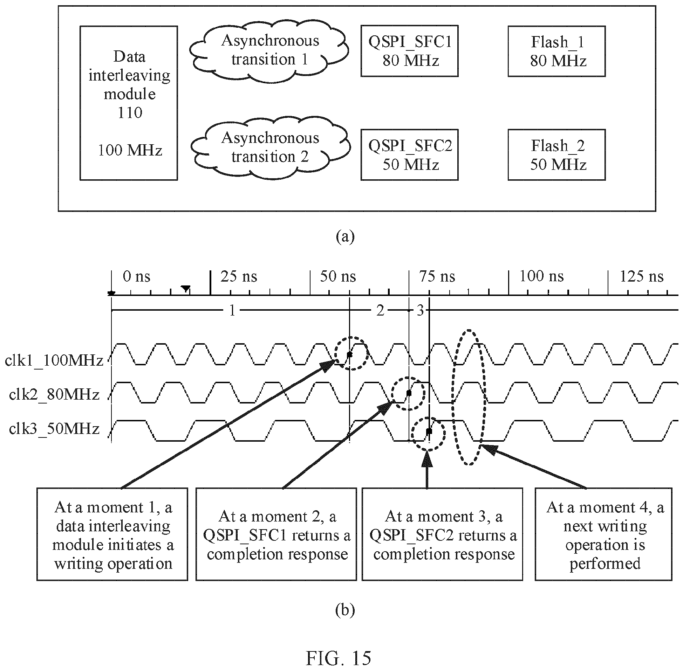

In some possible implementations, specifications of the flash devices corresponding to the plurality of QSPI_SFCs may be different. In other words, the plurality of flash devices may support different maximum clock frequencies. Two flash devices are used as examples. As shown in FIG. 14, when maximum clock frequencies supported by the Flash_1 and the Flash_2 are different, and are also different from the clock frequency of the data interleaving module 110, three clock domains exist in the system: a clock domain 1, a clock domain 2, and a clock domain 3. For example, the maximum clock frequencies supported by the Flash_1 and the Flash_2 are 50 MHz and 80 MHz respectively, and the clock frequency of the data interleaving module 110 in the apparatus 100 is 100 MHz. In different modes, read/write speeds supported by the Flash_1 and the Flash_2 may be the same or different. Specifically, as shown in (a) in FIG. 15, when the data is written into the flash in the mode 0 and the mode 3, the data interleaving module 110 completes interaction with the QSPI_SFC1 and the QSPI_SFC2 separately through asynchronous transition, so that the data can be written into the Flash_1 and the Flash_2 at frequencies of the clock domain 2 and the clock domain 3. More specifically, as shown in (b) in FIG. 15, when the data interleaving module 110 initiates data writing at a moment 1, the QSPI_SFC1 writes the data slice into the Flash _1 at a moment 2, and the QSPI_SFC2 writes the data slice into the Flash_2 at a moment 3. It may be learned from a waveform detection result that the clock domain 2 has sufficient idle time for the clock domain 3. It may be seen that, each time the data interleaving module initiates a data write or read instruction, a time for completing data writing or reading depends on a minimum clock domain in the system. In other words, in this case, a speed of performing dual-chip interleaving read/write is twice the minimum clock, that is 100 Mbps/Lane*4. In some possible implementations, the clock frequencies of the two flash devices may alternatively be set to 60 MHz, to ensure that the clock domains of the two flash devices are the same, and the data interleaving module completes interaction with the two flash devices through asynchronous transition.

In the mode 1 single-chip 1 read/write mode, interaction between the data interleaving module 110 and the QSPI_SFC1 is completed through asynchronous transition, so that the data is written to the Flash_1 at the frequency of the clock domain 2. In this mode, the read/write speed is 80 Mbps/Lane*4.

In the mode 2 single-chip 2 read/write mode, interaction between the data interleaving module 110 and the QSPI_SFC2 is completed through asynchronous transition, so that the data is written to the Flash _1 at the frequency of the clock domain 3. In this mode, the read/write speed is 50 Mbps/Lane*4.

In the dual-chip independent mode, the data interleaving module completes asynchronous transition with a channel QSPI_SFC1 and a channel QSPI_SFC2 separately. In this way, data read/write speeds of the two channels are 80 Mbps/Lane*4 and 50 Mbps/Lane*4 respectively.

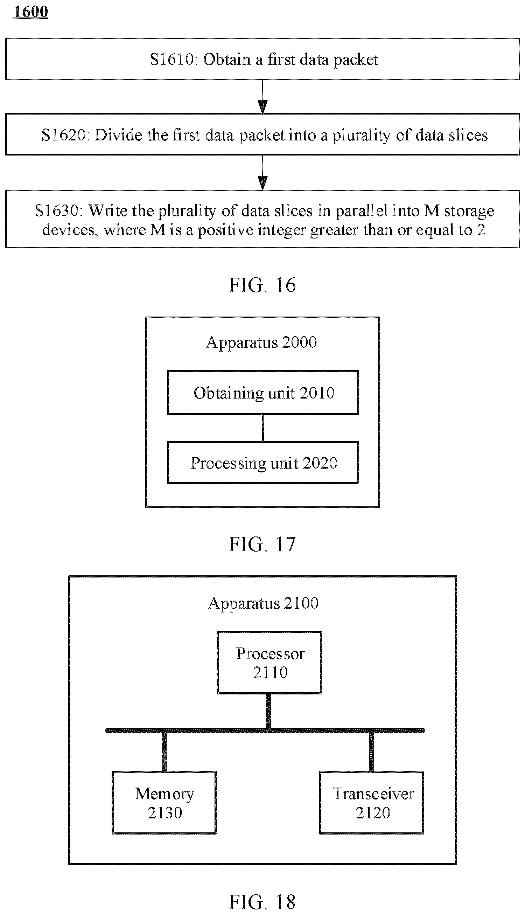

FIG. 16 is a schematic flowchart of a method 1600 for controlling data reading/writing according to an embodiment of this application. The method shown in the procedure may be applied to the product shown in FIG. 1, or may be performed by the apparatus shown in FIG. 2. The method 1600 includes the following steps.

S1610: Obtain a first data packet.

For example, the first data packet may be the first data in the foregoing embodiments, or may be other data that needs to be written into the storage device. This is not specifically limited in this embodiment of this application.

S1620: Divide the first data packet into a plurality of data slices.

For a method for dividing the first data packet into the plurality of data slices, refer to the descriptions in the foregoing embodiments. Details are not described herein again.

S1630: Write the plurality of data slices in parallel into M storage devices, where M is a positive integer greater than or equal to 2.

For example, the M storage devices may include a first storage device and a second storage device. More specifically, the first storage device may be the Flash_1 in the foregoing embodiments, and the second storage device may be the Flash_2 in the foregoing embodiments, or may be another storage device. This is not specifically limited in this application.

For a method for writing the plurality of data slices in parallel into the M storage devices, refer to the descriptions in the foregoing embodiments. Details are not described herein again.

According to the method for controlling data reading/writing provided in this embodiment of this application, data is sliced, and data slices are controlled to be written in parallel into a plurality of storage devices, so that a data write speed can be improved, and duration required for starting up a program by a system can be reduced. When the foregoing method for controlling data reading/writing is applied to a terminal device such as an in-vehicle gateway, a mobile phone, or a computer, duration required for system loading can be significantly reduced. In addition, the foregoing method for controlling data reading/writing supports parallel reading/writing of data from/into the storage devices of different specifications, so that compatibility of the storage device can be improved. When maximum clock frequencies of the plurality of storage devices are different, different clock frequencies are supported to be configured for the storage devices, to maximize read/write speeds.

FIG. 17 is a schematic block diagram of an apparatus 2000 for controlling data reading/writing according to an embodiment of this application. The apparatus 2000 includes an obtaining unit 2010 and a processing unit 2020. The obtaining unit 2010 may implement a corresponding communication function, and the processing unit 2020 is configured to process data.

Optionally, the apparatus 2000 may further include a storage unit. The storage unit may be configured to store instructions and/or data. The processing unit 2020 may read the instructions and/or the data in the storage unit, so that the apparatus implements the foregoing method embodiments.

The apparatus 2000 may include units configured to perform the method in FIG. 4, FIG. 5, or FIG. 16. In addition, the units in the apparatus 2000 and the foregoing other operations and/or functions are separately intended to implement corresponding procedures in the method embodiment in FIG. 4, FIG. 5, or FIG. 16.

When the apparatus 2000 is configured to perform the method 1600 in FIG. 16, the obtaining unit 2010 may be configured to perform S 1610 in the method 1600, and the processing unit 2020 may be configured to perform S1620 to S 1640 in the method 1600.

Specifically, the apparatus 2000 includes: the obtaining unit 2010, configured to obtain a first data packet; and the processing unit 2020, configured to divide the first data packet into a plurality of data slices; and write the plurality of data slices in parallel into M storage devices, where M is a positive integer greater than or equal to 2.

In some possible implementations, the processing unit 2010 is further configured to: determine a first address of a first storage device based on sizes of the plurality of data slices and an offset address of the first storage device, and determine a second address of a second storage device based on the sizes of the plurality of data slices and an offset address of the second storage device, where the M storage devices include the first storage device and the second storage device; and write a first data slice into the first address at a first speed, and write a second data slice into the second address at a second speed.

In some possible implementations, maximum clock frequencies of the first storage device and the second storage device are different.

In some possible implementations, the processing unit 2010 is further configured to: write a data slice other than the first data slice in the plurality of data slices into the first storage device.

In some possible implementations, when an error occurs in the second data slice read from the second storage device, the processing unit 2010 is further configured to: read the second data slice from the first storage device.

In some possible implementations, the processing unit 2010 is further configured to: read the plurality of data slices in parallel from the M storage devices.

In some possible implementations, the processing unit 2010 is further configured to: determine the M storage devices according to a first instruction, where the first instruction is determined based on a capacity required by the first data packet and a read/write speed required by the first data packet.

In some possible implementations, the processing unit 2010 further includes: detecting whether read/write time sequences of a first interface and a second interface are consistent, where the first interface is an interface between the first storage device and a first controller, the second interface is an interface between the second storage device and a second controller, the first controller and the second controller are configured to control the data slice to be read from and/or to be written to the storage device, and the M storage devices include the first storage device and the second storage device; and when the read/write time sequences of the first interface and the second interface are inconsistent, aborting writing or reading of the data slice, and reporting an error, where the error indicates that the read/write time sequences of the first interface and the second interface are inconsistent.

The processing unit 2020 in FIG. 17 may be implemented by at least one processor or a processor-related circuit, the obtaining unit 2010 may be implemented by a transceiver or a transceiver-related circuit, and the storage unit may be implemented by at least one memory.

FIG. 18 is a schematic block diagram of an apparatus for controlling data reading/writing according to an embodiment of this application. As shown in FIG. 18, the apparatus 2100 for controlling data reading/writing may include: a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130. The transceiver 2130 receives/sends some parameters. Optionally, the memory 2130 may be coupled to the processor 2110 by using an interface, or may be integrated with the processor 2110.

The transceiver 2120 may include but is not limited to, a transceiver apparatus such as an input/output interface (input/output interface), to implement communication between the apparatus 2100 and another device or a communication network.

In an implementation process, steps in the methods may be implemented by using a hardware integrated logic circuit in the processor 2110, or by using instructions in a form of software. The methods disclosed with reference to embodiments of this application may be directly performed by a hardware processor, or may be performed by a combination of hardware in the processor and a software module. The software module may be located in a mature storage medium in the art such as a random access memory, a flash memory, a read-only memory, a programmable read-only memory, an electrically erasable programmable memory, or a register. The storage medium is located in the memory 2130, and the processor 2110 reads information in the memory 2130 and completes the steps in the foregoing methods in combination with hardware of the processor 2110. To avoid repetition, details are not described herein.

In embodiments of this application, the memory may include a read-only memory and a random access memory, and provides instructions and data to the processor. A part of the processor may further include a non-volatile random access memory. For example, the processor may further store device type information.

An embodiment of this application further provides a computer-readable storage medium. The computer-readable medium stores program code, and when the computer program code is run on a computer, the computer is enabled to perform any one of the methods in FIG. 4, FIG. 5, or FIG. 16.

An embodiment of this application further provides a chip, including at least one processor and a memory. The at least one processor is coupled to the memory, and is configured to read and execute instructions in the memory, to perform any one of the methods in FIG. 4, FIG. 5, or FIG. 16.

An embodiment of this application further provides a vehicle, including at least one processor and a memory. The at least one processor is coupled to the memory, and is configured to read and execute instructions in the memory, to perform any one of the methods in FIG. 4, FIG. 5, or FIG. 16.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Specifically, the term "example" is used to present a concept in a specific manner.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for controlling data reading/writing, comprising:
obtaining a first data packet;
dividing the first data packet into a plurality of data slices; and
writing the plurality of data slices in parallel into M storage devices, wherein M is a positive integer greater than or equal to 2.

2. The method according to claim 1, wherein the method further comprises:
determining a first address of a first storage device based on sizes of the plurality of data slices and an offset address of the first storage device, and determining a second address of a second storage device based on the sizes of the plurality of data slices and an offset address of the second storage device, wherein the M storage devices comprise the first storage device and the second storage device; and
the writing the plurality of data slices in parallel into M storage devices comprises:
writing the first data slice into the first address, and writing the second data slice into the second address.

3. The method according to claim 2, wherein maximum clock frequencies of the first storage device and the second storage device are different.

4. The method according to claim 2 or 3, wherein the method further comprises:
writing a data slice other than the first data slice in the plurality of data slices into the first storage device.

5. The method according to claim 4, wherein when an error occurs in the second data slice read from the second storage device, the method further comprises:
reading the second data slice from the first storage device.

6. The method according to any one of claims 1 to 5, wherein the method further comprises:
reading the plurality of data slices in parallel from the M storage devices.

7. The method according to any one of claims 1 to 6, wherein the method further comprises:
determining the M storage devices according to a first instruction, wherein the first instruction is determined based on a capacity required by the first data packet and a read/write speed required by the first data packet.

8. The method according to any one of claims 1 to 7, wherein the method further comprises:
detecting whether read/write time sequences of a first interface and a second interface are consistent, wherein the first interface is an interface between the first storage device and a first controller, the second interface is an interface between the second storage device and a second controller, the first controller and the second controller are configured to control the data slice to be read from and/or to be written into the storage device, and the M storage devices comprise the first storage device and the second storage device; and
when the read/write time sequences of the first interface and the second interface are inconsistent, aborting writing or reading of the data slice, and reporting an error, wherein the error indicates that the read/write time sequences of the first interface and the second interface are inconsistent.

9. An apparatus for controlling data reading/writing, comprising:
an obtaining unit, configured to obtain a first data packet; and
a processing unit, configured to divide the first data packet into a plurality of data slices, and write the plurality of data slices in parallel into M storage devices, wherein M is a positive integer greater than or equal to 2.

10. The apparatus according to claim 9, wherein the processing unit is further configured to:
determine a first address of a first storage device based on sizes of the plurality of data slices and an offset address of the first storage device, and determine a second address of a second storage device based on the sizes of the plurality of data slices and an offset address of the second storage device, wherein the M storage devices comprise the first storage device and the second storage device; and
write a first data slice into the first address, and write a second data slice into the second address.

11. The apparatus according to claim 10, wherein maximum clock frequencies of the first storage device and the second storage device are different.

12. The apparatus according to claim 10 or 11, wherein the processing unit is further configured to:
write a data slice other than the first data slice in the plurality of data slices into the first storage device.

13. The apparatus according to claim 12, wherein when an error occurs in the second data slice read from the second storage device, the processing unit is further configured to:
read the second data slice from the first storage device.

14. The apparatus according to any one of claims 9 to 13, wherein the processing unit is further configured to:
read the plurality of data slices in parallel from the M storage devices.

15. The apparatus according to any one of claims 9 to 14, wherein the processing unit is further configured to:
determine the M storage devices according to a first instruction, wherein the first instruction is determined based on a capacity required by the first data packet and a read/write speed required by the first data packet.

16. The apparatus according to any one of claims 9 to 15, wherein the processing further comprises:
detecting whether read/write time sequences of a first interface and a second interface are consistent, wherein the first interface is an interface between the first storage device and a first controller, the second interface is an interface between the second storage device and a second controller, the first controller and the second controller are configured to control the data slice to be read from and/or to be written into the storage device, and the M storage devices comprise the first storage device and the second storage device; and
when the read/write time sequences of the first interface and the second interface are inconsistent, aborting writing or reading of the data slice, and reporting an error, wherein the error indicates that the read/write time sequences of the first interface and the second interface are inconsistent.

17. An apparatus for controlling data reading/writing, comprising:
a transceiver, configured to receive and send a message;
a memory, configured to store a computer program; and
a processor, configured to execute the computer program stored in the memory, to enable the apparatus to perform the method according to any one of claims 1 to 8.

18. A vehicle, comprising the apparatus according to any one of claims 9 to 16, or the apparatus according to claim 17.

19. A computer-readable storage medium, wherein the computer-readable storage medium stores a computer program, and when the computer program is executed by a computer, the method according to any one of claims 1 to 8 is implemented.

20. A computer program product, comprising computer instructions, wherein when the computer instructions are run on one or more processors, the method according to any one of claims 1 to 8 is implemented.

21. A chip, wherein the chip comprises a processor and a data interface, and the processor reads, by using the data interface, instructions stored in a memory, to perform the method according to any one of claims 1 to 8.
